Europäisches Patentamt

European Patent Office

Office européen des brevets

(19)

(11) Numéro de publication: **0 123 589**
**A1**

## (12) DEMANDE DE BREVET EUROPEEN

(21) Numéro de dépôt: 84400649.4

(22) Date de dépôt: 02.04.84

(51) Int. Cl.³: **F 16 H 25/22**

(30) Priorité: 20.04.83 FR 8306440

(43) Date de publication de la demande:
31.10.84 Bulletin 84/44

(84) Etats contractants désignés:
CH DE FR GB IT LI SE

(71) Demandeur: RATIER-FIGEAC, Société dite:

F-46100 Figeac(FR)

(72) Inventeur: Gaiani, Robert
Hauteval
F-46100 Figeac(FR)

(74) Mandataire: Levy, David et al,
c/o S.A. Fedit-Loriot 38, avenue Hoche
F-75008 Paris(FR)

(54) Perfectionnements aux systèmes vis-écrou à billes, et leur procédé de fabrication.

(57) Le procédé consiste à fabriquer au moins l'écrou (2) séparément de ses moyens de fixation (4), puis de réunir par des moyens de liaison ledit écrou à ses moyens de fixation de manière à réaliser un ensemble qui soit adapté au besoin spécifique de chaque application dudit système vis-écrou à billes.

EP 0 123 589 A1

Croydon Printing Company Ltd.

<u>Perfectionnements aux systèmes vis-écrou à billes,</u>
<u>et leur procédé de fabrication.</u>

La présente invention concerne des perfectionnements aux systèmes vis-écrou à billes, et leur procédé de fabrication.

Les systèmes vis-écrou à billes sont largement utilisés dans des machines-outils, pour l'entraînement soit d'une pièce à usiner, l'outil étant alors fixe, soit de l'outil lorsque la pièce à usiner est fixe, ou encore pour d'autres nombreuses utilisations.

Dans certaines réalisations, la vis comporte des moyens de fixation constitués par au moins un embout de fixation prévu à une extrémité de ladite vis, et plus généralement par deux embouts dont l'un est monté fixe dans un palier solidaire du bâti de la machine, tandis que l'autre est relié à un moteur d'entraînement en rotation de la vis, par l'intermédiaire d'un palier également.

Quant à l'écrou, il comporte aussi des moyens de fixation constitués par une collerette qui doit être rendue solidaire d'un support mobile transversalement, un chariot par exemple.

Jusqu'à maintenant chaque ensemble du système vis ou écrou est fabriqué et usiné d'une seule pièce avec les moyens de fixation.

Or, toute application comprend des besoins spécifiques liés à l'usinage de la pièce concernée. C'est ainsi qu'on peut utiliser des vis plus ou moins longues, des écrous pourvus de collerettes plus ou moins grandes, etc.

De ce fait, toute fabrication ou standardisation des systèmes vis-écrou ou même des ensembles constitutifs vis ou écrous, n'a pu être envisagée en raison du grand nombre d'applications possibles qui sont, chacune, très spécifiques.

Il s'ensuit que le coût de ces systèmes vis-écrou est relativement élevé et que leur fabrication en série est pratiquement impossible à réaliser.

La présente invention a pour objet de remédier aux inconvénients précités et de proposer un procédé de fabrication d'un système vis-écrou à billes qui, non seulement peut être réalisé industriellement, mais encore être adapté à tous les besoins spécifiques des applications particulières des machines-outils sur lesquelles ledit système est monté.

Le procédé de fabrication selon l'invention est caractérisé en ce qu'il consiste à fabriquer au moins l'écrou séparément de ses moyens de fixation, puis de réunir par des moyens de liaison ledit écrou à ses moyens de fixation de manière à réaliser un ensemble qui soit adapté aux besoins spécifiques de chaque application dudit système vis-écrou à billes.

Un premier avantage de la présente invention est de pouvoir fabriquer en série l'un au moins des ensembles du système de manière à faire face, dans les brefs délais, aux besoins des utilisateurs.

En effet, et en prenant pour exemple la vis, on s'aperçoit que pour chaque machine-outil devant recevoir la vis, c'est cette dernière, en général, qui doit être adaptée à l'application particulière demandée à la machine-outil, tandis que le ou les embouts de fixation sont les mêmes pour des applications similaires. En fait, de façon usuelle, l'utilisateur est souvent amené à demander différentes longueurs utiles de la vis et comprises entre quelques dizaines de centimètres et plusieurs mètres.

Auparavant l'on était obligé d'usiner la vis à la longueur appropriée en même temps que son ou ses embouts de fixation, de manière à livrer un ensemble d'une seule pièce.

Grâce à la présente invention, on fabrique et on usine des vis dans une gamme restreinte de longueurs et, séparément les embouts de fixation. Lorsqu'une demande émanant d'un utilisateur parvient, il suffit alors de choisir une vis dont la longueur est supérieure à celle demandée, puis de découper ladite vis à la longueur appropriée. Cette première opération étant réalisée, on procède à la liaison entre la vis découpée et son ou ses embouts de fixation puisque, dans certains cas, un seul embout est nécessaire.

L'exemple de la vis est également étendu à l'ensemble de l'écrou où le corps de l'écrou est fabriqué séparément de la collerette de fixation de manière à permettre l'adaptation de l'écrou, ladite adaptation étant souvent déterminée par le choix judicieux de la collerette.

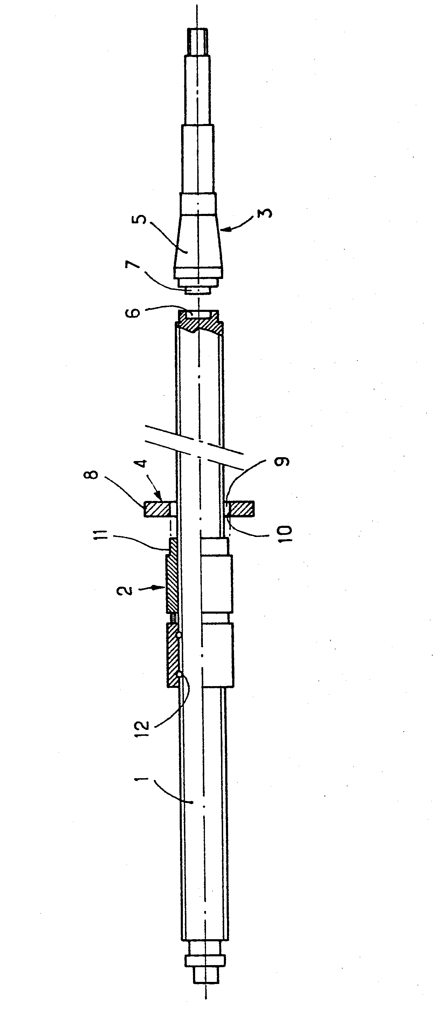

D'autres avantages ressortiront à la lecture de la description d'un mode de réalisation préféré de l'invention, donné à titre d'exemple non limitatif, ainsi que du dessin annexé sur lequel la figure unique est une vue en élévation partiellement en coupe et éclatée d'un système à billes suivant l'invention.

Un système vis-écrou à billes comprend une une vis 1, un écrou 2, des moyens de fixation 3,4 et des billes 12 circulant dans des gorges ménagées sur les faces périphériques en regard des vis et écrou. Le fonctionnement d'un tel système d'entraînement est bien connu des spécialistes et ne sera donc pas décrit dans le détail. De même, les parties de la machine-outil sur lesquelles est fixé le système ne seront ni représentées, ni décrites.

Le procédé selon l'invention consiste à fabriquer au moins la vis 1 séparément de ses moyens de fixation 3 constitués, en l'espèce, par au moins un embout (5) et, plus généralement, par deux embouts dont l'un est monté libre dans un palier support et dont l'autre est relié, par des moyens appropriés, à un organe moteur d'entraînement en rotation de la vis 1.

Ainsi, on peut fabriquer à l'avance plusieurs séries de vis, chaque série étant constituée par des vis de même longueur, les différentes longueurs étant comprises entre quelques dizaines de centimètres et plusieurs mètres. Si pour une application particulière, l'utilisateur demande une longueur utile de 60 cm par exemple, on prend une vis d'un mètre qu'on découpe aux dimensions adéquates pour avoir la longueur utile de 60 cm. Après quoi on usine les extrémités de ladite vis pour ménager des évidements borgnes ou parties femelles 6 aptes à recevoir les parties mâles 7 des embouts de fixation 3. L'emboîtement ajusté des parties femelles et mâles 6, 7 est consolidé par une soudure au laser desdites parties 6 et 7 de façon que l'ensemble vis 1 et embouts de fixation 3 constitue un ensemble homogène, de même tenue et/ou caractéristiques que si on avait fabriqué ledit ensemble d'une seule pièce.

Il faut noter par ailleurs que la fabrication en série des embouts 3 adaptés à chaque constructeur de machines-outils entraîne des gains sur le temps d'usinage, une réduction des délais et une manipulation aisée.

On procède de même avec les écrous 2 qui sont fabriqués séparément de leurs moyens de fixation constitués par des collerettes 8. Ces dernières présentent chacune un orifice central 9 dont le bord 10 doit venir s'ajuster correctement sur un épaulement annulaire 11 ménagé à une extrémité de l'écrou 2.

La liaison de la collerette 8 sur l'écrou 2 est effectuée au moyen d'une soudure au laser.

L'usinage de l'écrou de base 2 peut être réalisé à l'avance à partir de tableaux de consommation d'où une réduction des temps de fabrication et de maintien, l'adaptation de l'ensemble d'écrou se faisant par la collerette.

Bien entendu, l'invention n'est nullement limitée au mode de réalisation de l'exemple décrit et représenté, elle est susceptible de nombreuses variantes accessibles à l'homme de l'art, suivant les applications envisagées et sans s'écarter pour cela du cadre de l'invention.

REVENDICATIONS

1. - Procédé de fabrication d'un système à billes pour une transmission de mouvement et comprenant au moins deux ensembles constitués l'un par un écrou et ses moyens de fixation et l'autre par une vis et ses moyens de fixation, caractérisé en ce qu'il consiste à fabriquer la vis séparément de ses moyens de fixation, puis de réunir par des moyens de liaison ladite vis à ses moyens de fixation de manière à réaliser un ensemble qui soit adapté au besoin spécifique de chaque application dudit système vis-écrou à billes.

2. - Procédé selon la revendication 1, caractérisé en ce que la vis et l'écrou sont fabriqués et usinés séparément de leurs moyens de fixation.

3. - Procédé selon l'une des revendications 1 ou 2, caractérisé en ce que la vis est fabriquée et usinée à une dimension puis découpée à la longueur appropriée en fonction des besoins spécifiques de chaque application.

4. - Procédé selon la revendication 1, caractérisé en ce que les moyens de liaison sont constitués notamment par une soudure au laser; par faisceau d'électrons; ou autre.

5. - Système vis-écrou à billes obtenu selon le procédé des revendications 1 à 4, caractérisé en ce que les moyens de fixation de la vis sont rapportés sur ladite vis.

6. - Système selon la revendication 4,
dans lequel les moyens de fixation de la vis sont
constitués par au moins un embout de fixation,
caractérisé en ce que ledit embout est rapporté
à l'une des extrémités de ladite vis, et en ce que
ladite vis comporte une partie de liaison apte à être
soudée sur une autre partie de liaison portée
par ledit embout.

7. - Système selon l'une des revendications 5
ou 6, caractérisé en ce que les moyens de liaison
sont constitués notamment par une soudure au laser.

1/1

Office européen
des brevets

# RAPPORT DE RECHERCHE EUROPEENNE

01.23589

Numéro de la demande

EP 84 40 0649

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | DE-C- 724 891 (REISHAUER) <br> * Figure 4 * | 1,3-6 | F 16 H 25/22 |
| | --- | | |
| A | US-A-4 053 167 (JELINEK) <br> * Figure 3 * | 1,2,4 | |
| | --- | | |
| A | US-A-2 957 368 (J. HENDRICKSON) <br> * Figure 3 * | 1,2,4 | |
| | ----- | | |

DOMAINES TECHNIQUES RECHERCHES (Int. Cl. 3)

F 16 H
B 23 Q

Le présent rapport de recherche a été établi pour toutes les revendications

| Lieu de la recherche | Date d'achèvement de la recherche | Examinateur |
|---|---|---|
| LA HAYE | 04-07-1984 | MENDE H. |